# EUROPÄISCHE PATENTSCHRIFT

(11) **EP 3 237 250 B1**
(45) Veröffentlichungstag und Bekanntmachung des Hinweises auf die Patenterteilung: **22.04.2020**
(21) Anmeldenummer: 15830781.9
(22) Anmeldetag: 17.12.2015
(51) Int. Cl.: G06F 3/0488, G06F 3/0484, G06F 3/0354, B60K 35/00

(54) **FINGERLEISTE UND ANWENDUNG DER FINGERLEISTE**
FINGER-OPERATED CONTROL BAR, AND USE OF SAID CONTROL BAR
BARRE TACTILE ET SON APPLICATION

(30) Priorität: 22.12.2014 DE 102014226760; 02.01.2015 DE 102015200011
(43) Veröffentlichungstag der Anmeldung: 01.11.2017
(73) Patentinhaber: Volkswagen AG, 38440 Wolfsburg (DE)
(72) Erfinder: WILD, Holger, 10179 Berlin (DE); KÖTTER, Nils, 38118 Braunschweig (DE)
(74) Vertreter: Hoefer & Partner Patentanwälte mbB
(86) Internationale Anmeldenummer: PCT/EP2015/080203
(87) Internationale Veröffentlichungsnummer: WO 2016/102296

(56) Entgegenhaltungen:
- EP-A1- 1 895 392
- EP-A2- 2 455 843
- WO-A1-2013/074866
- DE-A1-102008 023 505
- DE-A1-102011 086 859

## Beschreibung

### Stand der Technik

Die vorliegende Offenbarung betrifft ein Fortbewegungsmittel, ein Infotainmentsystem sowie eine Vorrichtung zur Bedienung eines Infotainmentsystems eines Fortbewegungsmittels. Insbesondere betrifft die vorliegende Offenbarung eine Möglichkeit zur Eingabe stufenloser Eingabewerte mittels Wischgesten, ohne dass der Anwender zur Vornahme gezielter Eingaben seinen Blick auf die Anwenderschnittstelle richten muss.

Der Trend in den Cockpits aktueller Fortbewegungsmittel, insbesondere Kraftfahrzeuge, geht derzeit zu einem schalterlosen Design. Da hierbei auch auf herkömmliche Dreh-Drück-Steller verzichtet werden soll, wodurch kein wesentliches haptisches Feedback auf Anwendereingaben folgt, besteht der Bedarf an einer Anwenderschnittstelle und einem Eingabeelement, welches sich gut in die Optik eines schalterlosen Cockpits integriert und dem Kunden dennoch eine gute Orientierung sowie eine optische Rückmeldung beim Einstellen wichtiger Funktionen (wie z.B. Audio-Lautstärke, Scrollen in langen Listen, Klimabedienung, etc.) gibt.

DE 10 2012 008 681 A1 offenbart eine Multifunktionsbedieneinrichtung für ein Kraftfahrzeug, bei welchem eine kombinierte Slider-/Tastfläche zur Entgegennahme von Wischgesten und Druckeingaben vorgesehen ist. Das Bedienelement ist länglich oder rechteckig ausgeführt, wobei ein erhabener Randvorsprung einer Führung des Fingers des Anwenders dient. Vorzugsweise ist das Bedienelement seitlich der Bildschirmanzeige im Wesentlichen vertikal angeordnet.

DE 10 2013 000 110 A1 offenbart ein Bedienverfahren und ein Bediensystem in einem Fahrzeug, bei welchem im Ansprechen auf eine Berührung einer berührungsempfindlichen Oberfläche auf einer zweiten Anzeigefläche auf einer ersten Anzeigefläche angezeigte Schaltflächen derart verändert werden, dass auf der ersten Anzeigefläche zu der Schaltfläche gehörige Zusatzinformationen angezeigt werden. Hierzu wird eine berührungsempfindliche Oberfläche für eine kapazitive Wechselwirkung mit einem Betätigungsobjekt (z.B. ein kapazitiver Touch-Screen) vorgesehen.

DE 10 2008 048 825 A1 offenbart ein Anzeige- und Bediensystem in einem Kraftfahrzeug mit benutzeradaptiver Darstellung, wobei über eine Nutzereingabe ein Modifiziermodus aktivierbar ist, in dem eine grafische Darstellung aller Anzeigeobjekte zumindest teilweise in einem Teilbereich der Anzeigefläche erfolgt. Auf diese Weise können zuvor über eine gesamte Anzeigefläche verteilte Objekte in einem solchen Teilbereich angezeigt werden, welcher in einem Greifraum eines Anwenders befindlich ist.

Ausgehend vom vorstehend zitierten Stand der Technik ist es eine Aufgabe der vorliegenden Offenbarung, eine komfortable Eingabeeinrichtung für Wischgesten optisch vorteilhaft in das Interieur eines Fortbewegungsmittels zu integrieren. Es ist eine weitere Aufgabe der vorliegenden Offenbarung, Rückmeldungen an einen Anwender eines solchen Systems intuitiv verständlich zu gestalten.

Die vorstehend identifizierte Aufgabe wird durch eine Vorrichtung zur Bedienung eines Infotainmentsystems eines Fortbewegungsmittels gelöst. Die Vorrichtung umfasst eine linien- oder kurvenförmig erstreckte Fingerleiste, welche zur haptischen (Längs-)Führung eines Fingers eines Anwenders eingerichtet ist. Mit anderen Worten wird eine eindimensionale Spur für den Finger des Anwenders vorgegeben. Eine solche Spur weist quer zu ihrer Längsrichtung insbesondere eine konkave und/oder eine konvexe (Teil-)Struktur auf, welche im Zuge einer Wischgeste von einem Anwender haptisch erfasst und zur Orientierung des Fingers auf der Fingerleiste verwendet werden kann. Zudem ist eine Erfassungseinheit zur Erfassung auf der Fingerleiste ausgeführter Wischgesten vorgesehen. Die Erfassungseinheit kann (beispielsweise kapazitiv) eine auf der Fingerleiste ausgeführte Bewegung menschlichen Gewebes erfassen und in elektrische Signale wandeln. Eine Auswerteeinheit ist zur Verarbeitung erfasster Wischgesten (bzw. durch diese erzeugter Signale) vorgesehen und kann in Form eines programmierbaren Prozessors, eines Mikrocontrollers, eines Nanocontrollers, o.ä., ausgeführt sein. Zudem weist die Vorrichtung einen linienförmigen Lichtauslass auf, welcher sich zumindest annähernd vollständig entlang der Fingerleiste erstreckt. Der Lichtauslass kann ein teilweise transparenter Kunststoff und/Glaskörper und/oder Sinterkörper sein, durch welchen ein hinter ihm liegendes Leuchtmittel Licht in Richtung des Anwenders ausschütten kann. Im Ansprechen auf eine mittels der Erfassungseinheit detektierte Anwendergeste kann die Vorrichtung die Anwendergeste mittels eines aus dem Lichtauslass emittierten Lichtsignals quittieren. Beispielsweise kann eine gestartete Funktion durch ein der Funktion zugeordnetes Lichtmuster quittiert werden. Das Lichtmuster kann auch eine oder mehrere Farben aufweisen, welche der jeweils gestarteten Funktion eindeutig zugeordnet sind. Auch unabhängig von einem erfolgreichen Start einer der Geste zugeordneten Funktion kann die Betätigung der Vorrichtung durch eine Ausgabe eines entsprechenden Lichtsignals quittiert werden. Insbesondere im Falle einer Wischgeste kann ein Schimmer (auch "Glow" oder "Corona") um den oder die Finger erzeugt werden, der sich mit dem Finger bewegt, wodurch der Anwender darüber in Kenntnis gesetzt wird, in welcher Weise die Vorrichtung seine Geste erfasst hat. Als Anwendergeste kann auch bereits ein Annähern bzw. ein Auflegen eines Fingers oder mehrerer Finger verstanden werden, wobei ein Lauflicht oder mehrere Lauflichter den Lichtauslass (z.B. startend an dessen Rand oder an dessen Rändern) entlang in Richtung des Fingers oder der Finger erzeugt wird, so dass auch ungeübte Anwender ein intuitiv verständliches Signal darüber erhalten, dass sie soeben eine Eingabeschnittstelle gefunden bzw. verwendet haben.

Die Fingerleiste kann beispielsweise zur horizontalen Anordnung vorgesehen sein. Dies hat den Vorteil, dass in vertikaler Richtung ein Sims bzw. eine Auflage für einen Finger ausgebildet wird, wodurch in vertikaler Richtung entstehende Beschleunigungen (z.B. beim Durchfahren einer Bodenwelle oder eines Schlaglochs) den Finger des Anwenders nicht aus einem beabsichtigten Raumbereich vor der Fingerleiste bewegen. Besonders intuitiv wird die Bedienung der Vorrichtung, wenn die Fingerleiste oberhalb und/oder unterhalb einer Anzeigefläche in einem Fortbewegungsmittel angeordnet wird. Auf diese Weise steht die Vorrichtung bzw. die Fingerleiste in einem starken Kontext der Anzeigeflächen und wird intuitiv als Bestandteil einer Anwenderschnittstelle verstanden. Eine besonders angenehme und selbsterklärende Haptik ergibt sich bei Ausgestaltung der Fingerleiste in Form einer rinnen- oder muldenförmigen Längsnut, welche beispielsweise einer Oberfläche eines (ebenen oder gewölbten) Bildschirms folgt.

Bevorzugt ist der Lichtauslass in die Fingerleiste eingelassen, wodurch das emittierte Lichtsignal besonders stark mit der Anwendergeste assoziiert wird. Mit anderen Worten wird bei einer Bedienung der Fingerleiste auch der Lichtauslass überstrichen, so dass das quittierende Lichtsignal in unmittelbarer Nähe und insbesondere auch unter dem jeweiligen Finger des Anwenders angeordnet zu sein scheint.

Eine geeignete Möglichkeit zur Realisierung der quittierenden Lichtsignale besteht darin, hinter dem Lichtauslass eine Lichtquelle anzuordnen, welche einzelne Leuchtmittel (z.B. lichtimitierende Dioden, LEDs) umfasst, welche eine besonders schnelle Ansprechgeschwindigkeit bezüglich sie ansteuernder elektrischer Signale aufweisen. Dies ermöglicht eine besonders präzise Ausgabe, die Anwendergeste quittierender Lichtsignale. Insbesondere kann ein transluzentes (umgangssprachlich auch "milchig") Element zur Homogenisierung vom Lichtauslass ausgeschütteten Lichtes vorgesehen sein. Auf diese Weise sorgt das transluzente Element für eine Diffusion des eingestrahlten Lichtes in Richtung des Anwenders, wodurch einerseits die inhomogene Lichtquelle optisch attraktiver in Erscheinung tritt und dennoch eine präzise Positionierung des Lichtsignals möglich ist.

Die Vielfalt möglicher Eingaben wird dem Anwender besonders ersichtlich, wenn die Fingerleiste beidseitig durch optisch und/oder haptisch abgegrenzte Endbereiche zur Ausbildung von Tastenfeldern begrenzt ist. Beispielsweise können Stege quer zur Längserstreckung der Fingerleiste vorgesehen sein, welche der Anwender deutlich fühlen kann. Alternativ oder zusätzlich können quer zur Längsrichtung der Fingerleiste erstreckte Nuten vorgesehen sein, einen Wischbereich zwischen den Endbereichen optisch und haptisch gegenüber den Tastenfeldern abzugrenzen. Auch eine Bedienung der Tastenfelder kann auf diese Weise im Wesentlichen ohne ein optisches Erfassen der Vorrichtung durch den Anwender erfolgen. Dies erhöht die Verkehrssicherheit während der Bedienung der Vorrichtung. Beispielsweise können wiederholende Tipp-Eingaben bezüglich eines der Tastenfelder verwendet werden, um eine dem Wischbereich zugeordnete Funktion zu wechseln (englisch: "toggling"). Mögliche Funktionen, welche mittels der Tastenfelder "durchgeschaltet" werden können, werden im weiteren Verlauf der vorliegenden Beschreibung erläutert. Beispielsweise kann eine für den Wischbereich gewählte Funktion mittels einer Langdruck (englisch: "longpress")-Geste auch für zukünftige Bedienschritte dem Wischbereich zugeordnet werden. Auf diese Weise kann eine dauerhafte Zuordnung einer vom Anwender gewünschten Funktion zum Wischbereich erfolgen.

Der Lichtauslass kann bevorzugt eingerichtet sein, im Bereich der Tastenfelder unabhängig von einer aktuellen Lichtfarbe in sämtlichen anderen Bereichen der Fingerleiste eine vordefinierte andere Lichtfarbe auszugeben. Entsprechendes gilt für eine Lichtintensität. Mit anderen Worten sind die Bereiche des Lichtauslasses in den Endbereichen bevorzugt optisch undurchlässig gegenüber dem Wischgestenbereich der Fingerleiste abgegrenzt. Beispielsweise können drei transluzente Komponenten des Lichtauslasses im Bereich der optischen und/oder haptischen Abgrenzung durch zwei opake (also optisch "undurchlässige") Strukturen unterbrochen werden. Beispielsweise können diese optischen Unterbrechungen aus einer Oberfläche der Fingerleiste derart hervorstehen, dass sie für eine haptische Begrenzung der Endbereiche sorgen. Bevorzugt wird ein optisches Übersprechen von Licht zumindest vermieden, indem die opaken Strukturen in Richtung des Anwenders nicht von transluzenten Elementen überlagert sind. Eine besonders homogene Oberfläche kann indes erreicht werden, indem ein vollständig transparentes Element die Oberfläche der Fingerleiste bildet.

Die Erfassungseinheit kann eine lineare Anordnung einer Vielzahl kapazitiver Antennen aufweisen, welche in Haupterstreckungsrichtung (Längsrichtung) der Fingerleiste in einem Bereich hinter der Fingerleiste nebeneinander angeordnet sind. Mit anderen Worten folgen die einzelnen kapazitiven Antennen der Linienform der Fingerleiste, so dass besonders viele unterschiedliche Eingabepositionen auf der Fingerleiste von der Erfassungseinheit aufgelöst und der Auswerteeinheit gemeldet werden können. Gegenüber kapazitiven Oberflächen berührungsempfindlicher Bildschirme bieten die einzelnen kapazitiven Antennen den Vorteil einer flexibleren Auslegbarkeit hinsichtlich Empfindlichkeit und Reichweite. Beispielsweise kann die Erfassungseinheit nicht lediglich Berührungen, sondern auch Annäherungen eines Anwenders ohne Kontakt mit der Fingerleiste erfassen und der Auswerteeinheit melden.

Beispielsweise kann die Vorrichtung eine Anzeigeeinheit mit einer berührungsempfindlichen Oberfläche und eine linien- oder kurvenförmig erstreckte haptische Barriere auf der Anzeigeeinheit aufweisen. Die Barriere dient zur Abgrenzung einer Anzeigefläche der Anzeigeeinheit gegenüber einem zur Ausgestaltung einer Fingerleiste vorgesehenen Randbereich der Anzeigeeinheit. Ein im Bereich der Fingerleiste angeordnetes Segment der berührungsempfindlichen Oberfläche der Anzeigeeinheit dient also als Erfassungseinheit zur Erfassung von Druck-/Tipp- und Wischgesten eines Anwenders. Entsprechend kann ein im Bereich der Fingerleiste angeordnetes Segment der Anzeigeeinheit den Lichtauslass der Vorrichtung bilden. Mit anderen Worten ist der Lichtauslass als linienförmiges Segment einer selbstleuchtenden Anzeigeeinheit ausgestaltet. Durch die haptische Barriere kann die Anzeigeeinheit einerseits die Anzeigefläche und andererseits die Erfassungseinheit und den Lichtauslass der Vorrichtung bereitstellen, obwohl die Anzeigeeinheit als einstückiges Element gefertigt werden kann. Dies erhöht die Stabilität der Vorrichtung, senkt die Bauteilanzahl, erübrigt Montagevorgänge und senkt Kosten für die Produktion. Überdies vermeiden einstückige Komponenten im Fahrzeugbau Probleme des Knarzens, Klapperns und unerwünschten Schmutzeintrages, wodurch Fehlfunktionen vorgebeugt wird.

Bevorzugt kann weiter eine Annäherungssensorik vorgesehen sein, wobei die Auswerteeinheit eingerichtet ist, eine mittels der Annäherungssensorik erfasste Geste mittels eines aus dem Lichtauslass emittierten Lichtsignals zu quittieren. Mit anderen Worten wird nicht erst eine berührende Interaktion des Anwenders mit der Fingerleiste quittiert, sondern ein Lichtsignal bereits im Ansprechen auf eine Annäherung des Anwenders an die Fingerleiste ausgegeben, um den Anwender darüber in Kenntnis zu setzen, dass die Möglichkeit einer berührenden Eingabe mit der Vorrichtung besteht und wie eine solche Interaktion aussehen könnte. Dies kann beispielsweise durch Lichtverläufe und/oder Blinkmuster erfolgen, wodurch der Anwender zur Eingabe von Wisch- bzw. Multitouch-Gesten animiert wird.

Bevorzugt ist die Auswerteeinheit eingerichtet, eine erste vordefinierte Geste auf der Fingerleiste zur Anpassung einer Lautstärke einer Medienwiedergabe auszuwerten. Die erste Geste kann beispielsweise eine Wischgeste mit einem einzelnen Finger sein. Alternativ oder zusätzlich ist die Auswerteeinheit eingerichtet, eine zweite vordefinierte Geste auf der Fingerleiste zur Anpassung einer Lautstärke einer Sprachausgabe des Infotainmentsystems auszuwerten. Die zweite Geste kann beispielsweise eine Wischgeste mit genau zwei Fingern (Mehrfachberührungsgeste, Multitouch-Geste) sein. Alternativ oder zusätzlich kann die Auswerteeinheit eingerichtet sein, eine dritte vordefinierte Geste auf der Fingerleiste zur Anpassung einer Lautstärke von Klangzeichen bzw. akustischen Warntönen auszuwerten. Die dritte Geste kann beispielsweise eine mit genau drei Fingern ausgeführte Multitouch-Wischgeste sein. Eine Zuordnung zwischen den vorstehend genannten Gesten und beispielhaften Funktionsumfängen kann in beliebiger Weise abgeändert werden, ohne die vorliegende Offenbarung zu verlassen.

Je nach dem, welche Art von Geste bzw. welche Art durch die Geste gestarteter Funktion vorliegt, kann ein jeweiliger Hinweistext und/oder ein jeweiliges Hinweissymbol auf einer Anzeigeeinheit der Vorrichtung ausgegeben werden.

Alternativ oder zusätzlich kann ein über den Lichtauslass ausgegebenes Lichtsignal die Funktion und die Art der erfassten Geste unabhängig voneinander quittieren. Beispielsweise kann die Art der Geste durch eine Position bzw. mehrere Positionen erhöhter Lichtintensität veranschaulicht bzw. quittiert werden. Durch die Verwendung unterschiedlicher Farben können die bedienten Funktionen veranschaulicht werden. Beispielsweise kann bei einer Wischgestenbedienung einer Klimafunktion das Lichtsignal in Abhängigkeit einer Verringerung oder Erhöhung einer Solltemperatur in Richtung blau bzw. in Richtung rot verändert werden. Sofern die Funktion eine Lautstärkeveränderung ist, kann von einem weißen Licht in Richtung roten Lichts gewechselt werden, wenn die Lautstärke erhöht wird bzw. anders herum von einer roten Lichtfarbe zu weißem Licht gewechselt werden, wenn die Lautstärke verringert wird. Selbstverständlich kann der Lichtauslass annähernd vollständig mit Licht einer ersten Farbe beaufschlagt werden, um die Art und Weise der Funktionsanpassung zu veranschaulichen, während eine zweite Farbe für im Bereich der Finger des Anwenders ausgeschütteten Lichts gewählt wird, wodurch die erfasste Geste (z.B. unabhängig von einer angepassten Funktion) quittiert wird.

Die Auswerteeinheit kann weiter eingerichtet sein, im Ansprechen auf ein Verstreichen einer vordefinierten Zeitdauer nach einem Ende einer mittels der Erfassungseinheit erfassten Geste ein aus dem Lichtauslass emittiertes Lichtsignal einer aktuellen Einstellung des Ambientelichtes des Fortbewegungsmittels anzupassen. Mit anderen Worten kann der Lichtauslass sowie das hinter ihm angeordnete Leuchtmittel dazu verwendet werden, ein Ambientelichtkonzept zu unterstützen, sofern die Fingerleiste akut nicht zur Entgegennahme von Anwendergesten bzw. zu deren Quittierung verwendet wird. Die vordefinierte Zeitdauer, nach welcher im Nachgang einer Anwenderinteraktion automatisch zum Ambientelichtmodus umgeschaltet wird, kann beispielsweise eine Mindestzeitdauer in Form ganzzahliger Vielfacher einer Sekunde im Bereich zwischen einer Sekunde und 10 Sekunden sein. Auf diese Weise wird die Vorrichtung noch vielfältiger zur optisch ansprechenden und intuitiv sowie komfortabel zu bedienenden Innenraumgestaltung genutzt.

Gemäß einem zweiten Aspekt der vorliegenden Offenbarung wird ein Infotainmentsystem für ein Fortbewegungsmittel vorgeschlagen, welches eine Vorrichtung gemäß dem erstgenannten Offenbarungsaspekt umfasst. Mit anderen Worten ist die Vorrichtung in einer Ausgestaltung um Funktionsumfänge wie beispielsweise eine Musikwiedergabe und/oder eine Navigationsfunktion ergänzt. Entsprechend können auch Heiz-/Klimaumfänge über die Vorrichtung angepasst und veranschaulicht werden. Die Merkmale, Merkmalskombinationen und die sich aus diesen ergebenden Vorteile entsprechen dem erstgenannten Aspekt der vorliegenden Offenbarung, so dass zur Vermeidung von Wiederholungen auf die obigen Ausführungen verwiesen wird.

Gemäß einem dritten Aspekt der vorliegenden Offenbarung wird ein Fortbewegungsmittel mit einem Infotainmentsystem entsprechend dem zweitgenannten Aspekt oder einer Vorrichtung gemäß dem erstgenannten spekt vorgeschlagen. Das Fortbewegungsmittel kann beispielsweise ein PKW, ein Transporter, ein LKW, ein Motorrad, ein Luft- und/oder Wasserfahrzeug sein. Auch bezüglich der Merkmale, Merkmalskombinationen und der sich aus diesen ergebenden Vorteile des Fortbewegungsmittels wird zur Vermeidung von Wiederholungen auf die obigen Ausführungen verwiesen.

### Kurze Beschreibung der Zeichnungen

Nachfolgend werden Gegenstände der Offenbarung unter Bezugnahme auf die begleitenden Zeichnungen im Detail beschrieben. In den Zeichnungen ist:
- Figur 1: eine schematische Übersicht über Komponenten eines Ausführungsbeispiels eines Fortbewegungsmittels mit einer Vorrichtung;
- Figur 2: eine perspektivische Zeichnung eines Ausführungsbeispiels einer Vorrichtung;
- Figur 3: eine Detailansicht eines Ausschnittes des in Figur 2 gezeigten Ausführungsbeispiels;
- Figur 4: eine Draufsicht auf ein Ausführungsbeispiel einer Erfassungseinheit mit einer Vielzahl kapazitiver Antennen; und
- Figur 5: eine Prinzipskizze, veranschaulichend ein Ausführungsbeispiel einer Vorrichtung, bei welchem eine Anzeigeeinheit mit berührungsempfindlicher Oberfläche eine Anzeigefläche, eine Erfassungseinheit und einen Lichtauslass einer Vorrichtung bereitstellt.

### Gegenstände der Offenbarung

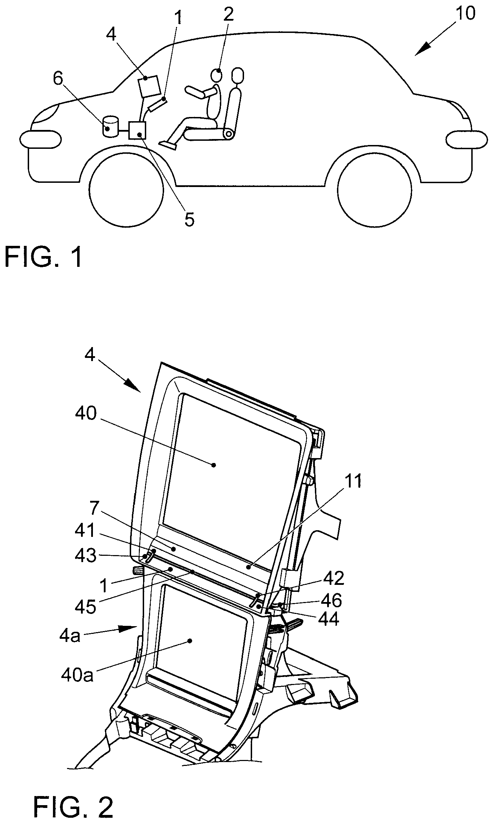

Figur 1 zeigt einen PKW 10 als Fortbewegungsmittel, in welchem ein Bildschirm 4 als Anzeigeeinheit informationstechnisch mit einem elektronischen Steuergerät 5 als Auswerteeinheit verbunden ist. Eine horizontal unterhalb des Bildschirms 4 angeordnete Fingerleiste 1 ist zur Erfassung von Anwendergesten sowie zur optischen Quittierung derselben mittels Lichtsignalen informationstechnisch mit dem elektronischen Steuergerät 5 verbunden. Ein Datenspeicher 6 hält vordefinierte Referenzen zur Klassifikation der Anwendergesten bereit und dient der Definition den klassifizierten Anwendergesten zugeordneter Lichtsignalmuster. Ein Anwender 2 streckt seinen Arm im Wesentlichen horizontal aus, um eine Wischgeste auf der Fingerleiste 1 vorzunehmen. Vertikalbeschleunigungen des PKWs 10 würden ohne eine die Fingerleiste 1 dazu führen, dass der Anwender die Fingerleiste 1 mitunter verfehlt. Zudem müsste der Anwender 2 sein Augenmerk auf die Fingerleiste 1 richten, um seinen Finger sauber auf derselben zu positionieren. Durch die vorgestellte Technologie können diese Vorgänge unterbleiben, da die Fingerleiste 1 eine vorteilhafte simsartige Struktur zur Führung des Fingers des Anwenders 2 aufweist.

Figur 2 zeigt ein Ausführungsbeispiel einer Vorrichtung mit zwei Bildschirmen 4, 4a, welche im Wesentlichen übereinander zur Anordnung in einer Mittelkonsole bzw. einem Armaturenbrett eines Fortbewegungsmittels vorgesehen sind. Die Anzeigeflächen 40, 40a der Bildschirme 4, 4a sind von oben nach unten der Reihe nach durch einen stegförmigen Rahmenteil 11 als haptische Barriere, eine Infrarot-LED-Leiste 7 als Annäherungssensorik und eine konkav ausgeführte Fingerleiste 1 getrennt, in welche ein linienförmiger Lichtauslass 45 eingelassen ist, welcher der Längserstreckungsrichtung der Fingerleiste 1 folgt. Distale Bereiche 43, 44 der Fingerleiste 1 sind durch senkrecht zur Längserstreckungsrichtung orientierte Stegstrukturen 41, 42 gegenüber einem mittleren Wischgestenbereich der Fingerleiste 1 als Schaltflächen abgegrenzt bzw. kenntlich gemacht. An den linienförmigen Lichtauslass 45 grenzt ein sich im Wesentlichen in Fahrtrichtung erstreckender Lichtleiter 46, welcher aus Fahrtrichtung stammendes Licht zur Erzeugung quittierender Lichtsignale in Richtung des Anwenders leitet.

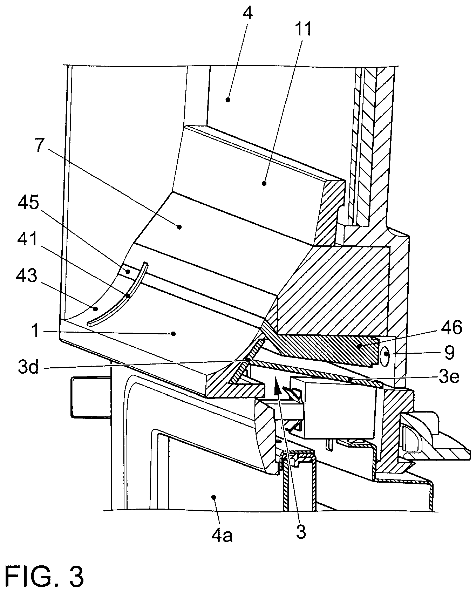

Figur 3 zeigt eine Detailansicht des in Figur 2 dargestellten Ausführungsbeispiels einer Vorrichtung. In dieser Ansicht ist exemplarisch eine LED 9 als Leuchtmittel einer Lichtquelle in Fahrtrichtung am Lichtleiter 46 vorgesehen, durch welche ein schmaler, jedoch diffus bzw. unscharf begrenzter Bereich des Lichtaustritts 45 im Licht der LED 9 erstrahlt. Kurz unterhalb der Oberfläche der Fingerleiste 1 ist ein Träger 3d einer kapazitiven Erfassungseinheit 3 angeordnet, welcher mit einer Platine 3e mechanisch und elektrisch verbunden ist. Die Platine 3e trägt (nicht dargestellte) elektronische Bauelemente zum Betrieb der Erfassungseinheit 3.

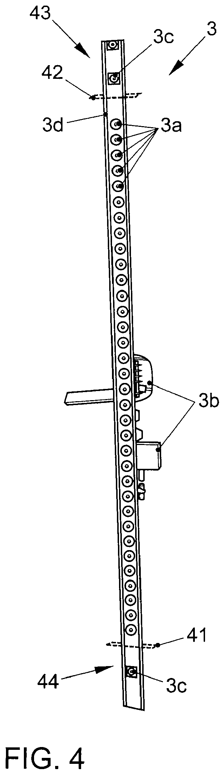

Figur 4 zeigt ein Ausführungsbeispiel einer Erfassungseinheit 3, wie sie in Figur 3 vorgestellt worden ist. In der Draufsicht nach Figur 4 sind linienförmig nebeneinander angeordnete kapazitive Antennen 3a auf dem Träger 3d zu erkennen, welche jeweils eine kreisscheibenförmige Gestalt aufweisen und äquidistant zueinander angeordnet sind. Durch gestrichelt dargestellte Stege 41, 42 werden Endbereiche 43, 44 gekennzeichnet, welche jeweils eine quadratisch ausgeführte kapazitive Antenne 3c zur Entgegennahme von Druck- und/oder Tipp- und/oder Long-Press-Gesten aufweisen. Elektronische Bauelemente 3b sind auf der Platine (Bezugszeichen 3e) in Figur 3 angeordnet und für den Betrieb der Antennen 3a, 3c vorgesehen.

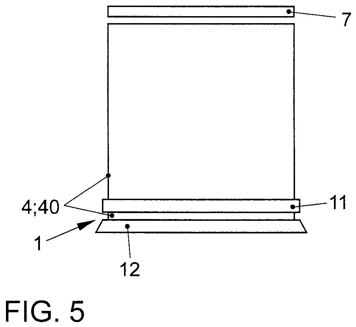

Figur 5 zeigt eine Prinzipskizze eines alternativen Ausführungsbeispiels einer Vorrichtung zur Bedienung eines Infotainmentsystems. Oberhalb eines Bildschirms 4 mit einer Anzeigefläche 40 ist eine Annäherungssensorik 7 zur Erkennung einer Annäherung einer Hand eines Anwenders an die Vorrichtung vorgesehen. Ein im Wesentlichen horizontal erstreckter Steg 11 auf dem Bildschirm 4 begrenzt einen schmalen Oberflächenbereich der Anzeigefläche 40, welcher einer Fingerleiste 1 zugeordnet ist, von einem Hauptanzeigebereich der Anzeigefläche 40. Der Bildschirm 4 ist als Touch-Screen (englisch für: "berührungsempfindliche Anzeigeeinheit") ausgestaltet, wie er im Stand der Technik bekannt ist. Zur Realisierung der Vorrichtung wird jedoch ein oberhalb des

Steges 11 angeordneter Anzeigebereich 40 gänzlich anders angesteuert als ein unterhalb des Steges 11 angeordneter Bereich, welcher die Erfassungseinheit und den Lichtauslass der Vorrichtung bildet. Mit anderen Worten ist ein einstückiger Bildschirm 4 in Form eines Touch-Screens vorgesehen, dessen unterer Rand die Erfassungseinheit und den Lichtauslass der Vorrichtung bildet. Nach unten abgegrenzt wird die Fingerleiste 1 durch einen im Wesentlichen horizontalen Sims 12 zur Auflage eines Fingers und dessen Führung beim Ausführen einer Wischgeste.

### Stand der Technik

Die vorliegende Erfindung betrifft eine Anwenderschnittstelle und ein Verfahren zur Ausgabe einer Rückmeldung über eine Eingabe eines Anwenders mittels einer Fingerleiste. Insbesondere betrifft die vorliegende Erfindung eine einfache und intuitive Möglichkeit zur Eingabe sich auf unterschiedliche Lautstärkeanpassungen beziehenden Wischgesten.

Moderne Fortbewegungsmittel verzichten in zunehmendem Maße auf in Hardware ausgeführte Schalter, welche lediglich einer einzigen Funktion zugeordnet sind. Vielmehr werden die zunehmenden Funktionsumfänge über Bildschirme (auch "Touchscreens") angezeigt und bedient. Um weitere Hardwareelemente einzusparen, ist oben eine sogenannte "Fingerleiste" vorgeschlagen worden, mittels welcher eine eindimensionale Führung des Fingers eines Anwenders während einer Wischgeste ermöglicht wird. Eine solche Fingerleiste ist vorstehend beschrieben worden.

US 8,026,902 B2 offenbart eine Eingabevorrichtung für ein Fortbewegungsmittel, mittels welcher Schieberegler dargestellt und zur Anpassung von Audiolautstärken und Klimaumfängen verwendet werden können.

JP 2010-36620 offenbart ein Anwenderendgerät, auf dessen Display ein Schieberegler dargestellt und zur Anpassung einer Audiolautstärke verwendet werden kann.

DE 10 2008 023 505 A1 zeigt eine Anzeigevorrichtung für ein Fortbewegungsmittel, in welchem eine farbliche Codierung zur optischen Unterscheidung unterschiedlicher Menüpunkte verwendet wird. Mitunter wird auch ein Bereich außerhalb des Bildschirms (z.B. ein lichttransmissiv ausgeführter Rahmenbereich) durch eine programmierte Lichtquelle von hinten bestrahlt.

EP 2 455 843 A2 offenbart eine Anwenderschnittstelle mit einem berührungsempfindlichen Bildschirm und einem strukturierten Randbereich mit einem Sensor. Um zu erkennen, wann Turbulenzen oder Vibrationen während der Bedienung eine Anwendereingabe vereiteln oder negativ beeinflusst haben können, wird durch den Sensor eine Beschleunigung und/oder eine Bewegung auf den strukturierten Randbereich gelegter Finger ermittelt und bei Überschreiten vordefinierter Grenzwerte vom Anwender gemachten Eingaben auf den Touchscreen relativiert.

WO 2013/074866 A1 offenbart eine Merkmalserkennungsvorrichtung, auf deren horizontal und vertikal erstreckten Gestenerkennungsbereichen Anwendereingaben gemacht werden können. Eine als "flick" bezeichnete Geste kann zum Verschieben eines auf einem Bildschirm dargestellten Fensters verwendet werden.

EP 1 895 392 A1 offenbart eine Vorrichtung zum Bedienen von Funktionen eines Gerätes, bei welcher ein Kanal als Führung eines Bedienobjektes vorgesehen ist. Über einen Sensor kann die Position eines Fingers ermittelt und in Abhängigkeit des Fingers ein Schieberegler zur Lautstärkeregelung für ein Radiogerät verwendet werden.

DE 10 2011 086 859 A1 offenbart einen berührungsempfindlichen Bildschirm, welcher ein haptisch erfassbares Orientierungselement aufweist. Dieses kann durch Laserbearbeitung einer Oberfläche der Anzeigevorrichtung erstellt werden. Somit kann der Anwender diesem Bereich zugewiesene Funktionen auch ohne Sichtverbindung bedienen.

Die im Stand der Technik bekannten Lösungen stellen für die Anpassung unterschiedlicher Audiolautstärken keine zufriedenstellenden Ansätze bereit. Insbesondere wird das Potential einer Fingerleiste zur Führung einer Wischgeste während der Führung eines Fortbewegungsmittels nicht erkannt. Es ist daher eine

Aufgabe der vorliegenden Erfindung, die vorstehend identifizierten Nachteile des Standes der Technik zu beheben.

### Offenbarung der Erfindung

Die vorstehend identifizierte Aufgabe wird erfindungsgemäß gelöst durch die Merkmale der unabhängigen Ansprüche 1 und 7.

Die Unteransprüche zeigen bevorzugte Weiterbildungen der Erfindung.

Erfindungsgemäß kann bereits während der Annäherung des Anwenders an die Fingerleiste eine Helligkeit der ausgeschütteten Lichtfarbe in Abhängigkeit einer aktuell eingestellten Lautstärke angepasst werden. Auf diese Weise erhält der Anwender eine optische Rückmeldung darüber, wie laut eine Audioausgabe derzeit erfolgen würde. Insbesondere für den Fall, dass aktuell kein Audiosignal ausgegeben wird, kann die Helligkeit daher einen wichtigen Hinweis dazu geben, in welcher Richtung und in welchem Maße eine Anpassung zur Realisierung eines aktuellen Anwenderwunsches vorzunehmen ist.

Zur weiteren Unterstützung des Anwenders kann im Ansprechen auf eine erkannte Berührung der Fingerleiste durch ein Eingabemittel (z.B. eine Hand eines Anwenders) ein Helligkeitsverlauf entlang der Fingerleiste angezeigt werden, durch welchen dem Anwender eine Orientierung dazu gegeben wird, in welche Richtung Wischgesten auf der Fingerleiste Einfluss auf die Audiolautstärke haben. Insbesondere können Bereiche geringer Helligkeit für geringe Audiolautstärken und Bereiche höherer Helligkeit für höhere Lautstärken stehen.

Bevorzugt kann während der Ausführung einer Wischgeste auf der Fingerleiste das Auflegen eines weiteren Fingers erkannt werden und im Ansprechen darauf die ausgeführte Lichtfarbe verändert werden, um den Anwender darüber zu informieren, dass nun auch die durch seine Wischgeste angepasste Audiosignalquelle umgeschaltet wurde. Mit anderen Worten kann die Anzahl aufgelegter Finger für eine jeweilige Audiosignalquelle (z.B. Medienwiedergabe, Telefonie, Navigations-/Sprachausgaben o.ä.) stehen. Durch die Erhöhung der Anzahl auf die Fingerleiste aufgelegter Finger kann eine besonders schnelle Umschaltung der angepassten Audiosignalquelle erfolgen.

Sofern während einer Wischgeste die Anzahl auf der Fingerleiste aufgelegter Finger verringert wird, kann die zuvor ausgeschüttete Lichtfarbe beibehalten werden. Alternativ oder zusätzlich kann auch die Zuordnung der Wischgeste zu der Audiosignalquelle, deren Lautstärke angepasst wird, beibehalten werden. Mit anderen Worten kann beispielsweise eine Multi-Touch-Wischgeste zur Anpassung einer Navigationsausgabelautstärke gestartet werden und zur Erhöhung des Anwenderkomforts als Ein-Finger-Wischgeste fortgeführt werden, ohne die Zuordnung zur Navigationsausgabelautstärke zu verlieren. Insbesondere können also mit zwei oder drei Fingern gestartete Wischgesten als Ein-Finger-Wischgesten fortgesetzt bzw. vollendet werden, ohne infolgedessen eine der Ein-Finger-Wischgeste originär zugeordnete Audiosignalquelle hinsichtlich ihrer Lautstärke anzupassen.

Zum Ausschalten der erfindungsgemäß ausgestalteten Anwenderschnittstelle kann bevorzugt eine Anwendereingabe mit einer vordefinierten Mindestdauer ("Long press-Geste") mittels der Fingerleiste erkannt werden, welche insbesondere mindestens zwei, bevorzugt mindestens drei Sekunden, andauert. Im Ansprechen darauf wird die Anwenderschnittstelle ausgeschaltet. Das Ausschalten der Anwenderschnittstelle kann sich auch lediglich auf eine Anzeigeeinrichtung der Anwenderschnittstelle beziehen, so dass beispielsweise eine Hintergrundbeleuchtung ("Backlight") der Anzeigeeinrichtung ausgeschaltet und somit einerseits die in die Fahrgastzelle ausgeschüttete Lichtleiste und andererseits die aufgenommene elektrische Leistung der Anwenderschnittstelle reduziert werden.

Gemäß einem zweiten Aspekt der vorliegenden Erfindung wird eine Anwenderschnittstelle für ein Fortbewegungsmittel vorgeschlagen. Diese umfasst eine Eingabeeinrichtung zur Entgegennahme geführter eindimensionaler Wischgesten ("Fingerleiste"), welche auch eine Annäherungssensorik aufweisen kann. Unter einer "Annäherung" sei im Rahmen der vorliegenden Erfindung eine Erkennung einer vordefinierten Nähe des Eingabemittels vor einer Herstellung eines Kontaktes mit der Anwenderschnittstelle verstanden. Zudem umfasst die Anwenderschnittstelle einen Lichtauslass und eine Auswerteeinheit. Der Lichtauslass kann beispielsweise mit einem Leuchtmittel (insbesondere LEDbasiert) gekoppelt und eingerichtet sein, über einen Lichtleiter Licht des Leuchtmittels in die Fahrgastzelle ausschütten. Die Auswerteeinheit kann auch als elektronisches Steuergerät verstanden werden, welches einen programmierbaren Prozessor (z.B. Mikrocontroller, Nanocontroller o.Ä.) aufweist. Die Fingerleiste ist eingerichtet, eine Anzahl aufgelegter Finger aufzulösen und in entsprechende elektrische Signale zu wandeln, welche von der Auswerteeinheit empfangen werden. Die Auswerteeinheit ist ihrerseits eingerichtet, eine für die Anzahl aufgelegter Finger vordefinierte Lichtfarbe auszuwählen und den Lichtauslass anzuweisen, die ausgewählte Lichtfarbe auszuschütten. Mit anderen Worten ist die erfindungsgemäße Anwenderschnittstelle eingerichtet, ein Verfahren gemäß dem erstgenannten Erfindungsaspekt auszuführen bzw. zu unterstützen, so dass sich die Merkmale, Merkmalskombinationen und die sich aus diesen ergebenden Vorteile des erstgenannten Erfindungsaspektes für die Anwenderschnittstelle entsprechend ergeben und zur Vermeidung von Wiederholungen auf das erfindungsgemäße Verfahren verwiesen wird.

Der Lichtauslass kann beispielsweise linienförmig entlang der Fingerleiste angeordnet sein. Insbesondere kann der Lichtauslass derart in die Fingerleiste integriert sein, dass der Finger eines Anwenders beim Ausführen einer Wischgeste auf der Fingerleiste auch den Lichtauslass überstreicht. Hierbei kann eine aktuelle Position des Fingers auf der Fingerleiste durch eine besondere Farbe und/oder eine besondere Intensität gekennzeichnet werden, um dem Anwender eine Rückmeldung darüber auszugeben, an welcher Stelle sein Finger von der Anwenderschnittstelle aktuell detektiert wird.

Die Auswerteeinheit kann erfindungsgemäß eingerichtet sein, einen weiteren auf der Fingerleiste aufgelegten Finger zu erkennen und im Ansprechen darauf die ausgeschüttete Lichtfarbe zu verändern. Mit anderen Worten erkennt die Auswerteeinheit aus den Signalen der Fingerleiste, dass zusätzlich zu mindestens einem bislang aufgelegten Finger ein weiterer Finger auf die Fingerleiste aufgelegt wurde und quittiert die erkannte Anzahl von Fingern durch eine entsprechende Ansteuerung des Leuchtmittels. Alternativ oder zusätzlich ist die Auswerteeinheit eingerichtet, eine verringerte Anzahl auf der Fingerleiste aufgelegter Finger zu erkennen, und im Ansprechen darauf eine zuvor ausgeschüttete Lichtfarbe beizubehalten. Mit anderen Worten wird im Ansprechen auf eine verringerte Anzahl aufgelegter Finger gerade keine Anpassung der ausgeschütteten Lichtfarbe vorgenommen. Entsprechend wird bei einer verringerten Anzahl aufgelegter Finger auch keine Anpassung einer der Wischgeste zugeordneten Funktion (z.B. eine Audiolautstärke, ein Klimabedienumfang o.Ä.) vorgenommen. Dies ermöglicht eine besonders ergonomische Anpassung solcher Funktionen, welche Multi-Touch-Wischgesten zugeordnet sind.

In Reaktion auf eine mit einer ersten Anzahl auf die Fingerleiste aufgelegter Finger gestarteten Wischgeste kann die Anwenderschnittstelle eingerichtet sein, eine Audio-Lautstärke für eine Medienwiedergabe (z.B. Musikwiedergabe oder Wiedergabe von Videomaterial) anzupassen. Alternativ oder zusätzlich kann die Anwenderschnittstelle in Reaktion auf eine mit einer zweiten Anzahl auf die Fingerleiste aufgelegter Finger gestarteten Wischgeste eine Audiolautstärke für eine Navigationsansage anpassen. Alternativ oder zusätzlich kann die Anwenderschnittstelle in Reaktion auf eine mit einer dritten Anzahl auf die Fingerleiste aufgelegter Finger gestarteten Wischgeste eine Audiolautstärke für eine Telefoniefunktion anpassen. Vorstehendes gilt insbesondere vorbehaltlich der Tatsache, dass die Anzahl aufgelegter Finger während der Wischgeste nicht erhöht wird, da hierdurch optional eine erneute Zuordnung der Auswirkung der Wischgeste zu einem Funktionsumfang vorgesehen sein kann. Die erste Vielzahl kann beispielsweise ein einziger Finger sein, welcher auf die Fingerleiste aufgelegt wird. Die zweite Vielzahl kann beispielsweise genau zwei Finger enthalten. Alternativ kann die zweite Vielzahl genau drei Finger enthalten. Alternativ oder zusätzlich kann die dritte Fingerzahl genau zwei Finger enthalten. Die dritte Vielzahl kann ebenso gut genau drei Finger enthalten. Besonders ergonomisch wird die Anpassung von Audiolautstärken dadurch gestaltet, dass insbesondere unter der Voraussetzung, dass aktuell nur eine einzige Audiosignalquelle ein Audiosignal ausgibt, eine Wischgeste mit nur einem Finger stets die Audiolautstärke der aktuell ausgebenden Audiosignalquelle anpasst, unabhängig davon, welche Audiosignalquelle einer ein-Finger-Wischgeste in anderen Betriebszuständen zugeordnet ist. Mit anderen Worten kann beispielsweise während einer Ausgabe einer Navigationsansage eine Ein-Finger-Wischgeste die Lautstärke der Navigationsausgabe anpassen, während in anderen Betriebszuständen der Anwenderschnittstelle zur Anpassung der Navigationslautstärke eine Multi-Touch-Wischgeste auf der Fingerleiste vorgesehen ist. Entsprechendes gilt für die Telefonielautstärke, welche während eines Telefonates bzw. während eines eingehenden Anrufes mit lediglich einem Finger angepasst werden kann, obwohl zur Anpassung der Telefonielautstärke in anderen Betriebszuständen der Anwenderschnittstelle eine Multi-Touch-Wischgeste vorgesehen ist.

Die Anwenderschnittstelle kann bevorzugt eine Anzeigeeinrichtung umfassen, welche eingerichtet ist, im Ansprechen auf eine Erfassung einer Wischgeste auf der Fingerleiste einen Schieberegler auf der Anzeigeeinrichtung darzustellen, welcher die aktuell eingestellte Audiolautstärke ebenso wie die zugeordnete Audiosignalquelle und optional eine Anzahl von Fingern beschreibt, welche zur Anpassung unter Verwendung der Fingerleiste vordefiniert ist. Der Schieberegler kann beispielsweise eine Statusleiste (üblicherweise eine oberste Zeile in einer graphischen Anwenderschnittstelle) überlagert. Optional können auch mehrere oder gar sämtliche Audiolautstärken der mittels der Fingerleiste bedienbaren Audiosignalquellen entsprechend (z.B. übereinander) dargestellt werden. Die Schieberegler können unterschiedliche Farben aufweisen, um den Anwender darüber zu informieren, in welcher Farbe die Fingerleiste für den Fall erstrahlt, dass die betreffende Audiosignalquelle aktuell angepasst wird. Alternativ oder zusätzlich können die Schieberegler Piktogramme aufweisen, welche die Anzahl der Finger symbolisieren, welche zur Anpassung der Audiosignalquelle mittels der Fingerleiste (zunächst) aufzulegen ist. Der oder die Schieberegler kann bzw. können auch zur direkten Entgegennahme von Anwendereingaben ausgestaltet sein. Hierzu kann beispielsweise die Anzeigeeinrichtung eine berührungsempfindliche Oberfläche aufweisen, welche Wischgesten und/oder Tippgesten auf den Schieberegler bzw. den Schiebereglern auflösen kann.

Gemäß einem dritten Aspekt der vorliegenden Erfindung wird ein Computerprogrammprodukt (z.B. ein Datenspeicher) vorgeschlagen, auf welchem Instruktionen gespeichert sind, die eine Auswerteeinheit einer erfindungsgemäßen Anwenderschnittstelle in die Lage versetzen, die Schritte eines Verfahrens gemäß dem erstgenannten Erfindungsaspekt auszuführen. Das Computerprogrammprodukt kann als CD, DVD, Blue-Ray Disk, Flashspeicher, Festplatte, RAM/ROM, Cache etc. ausgestaltet sein.

Gemäß einem vierten Aspekt der vorliegenden Erfindung wird eine Signalfolge, repräsentierend Instruktionen vorgeschlagen, welche eine Auswerteeinheit einer erfindungsgemäßen Anwenderschnittstelle in die Lage versetzen, die Schritte eines Verfahrens gemäß dem erstgenannten Erfindungsaspekt auszuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

### Kurze Beschreibung der Zeichnungen

Nachfolgend werden Ausführungsbeispiele der vorliegenden Erfindung unter Bezugnahme auf die beigefügten Zeichnungen beschrieben. In den Zeichnungen ist:

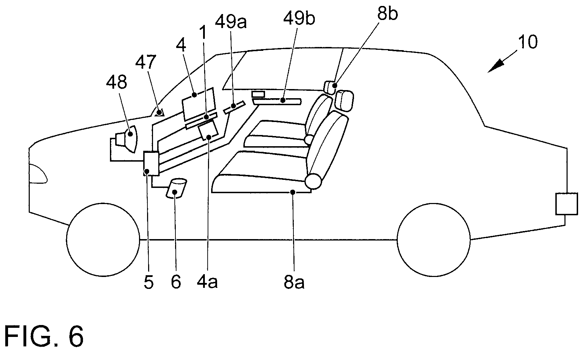

- Figur 6: eine schematische Übersicht über Komponenten eines Ausführungsbeispiels eines erfindungsgemäßen Fortbewegungsmittels mit einem Ausführungsbeispiel einer erfindungsgemäßen Anwenderschnittstelle;

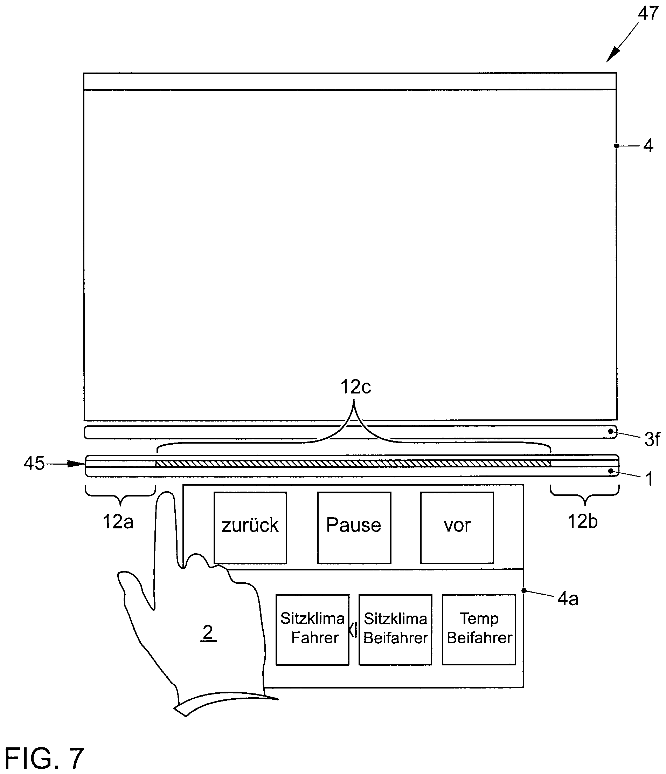

- Figur 7: das Ergebnis einer Annäherung einer Hand eines Anwenders an ein Ausführungsbeispiel einer erfindungsgemäßen Anwenderschnittstelle;

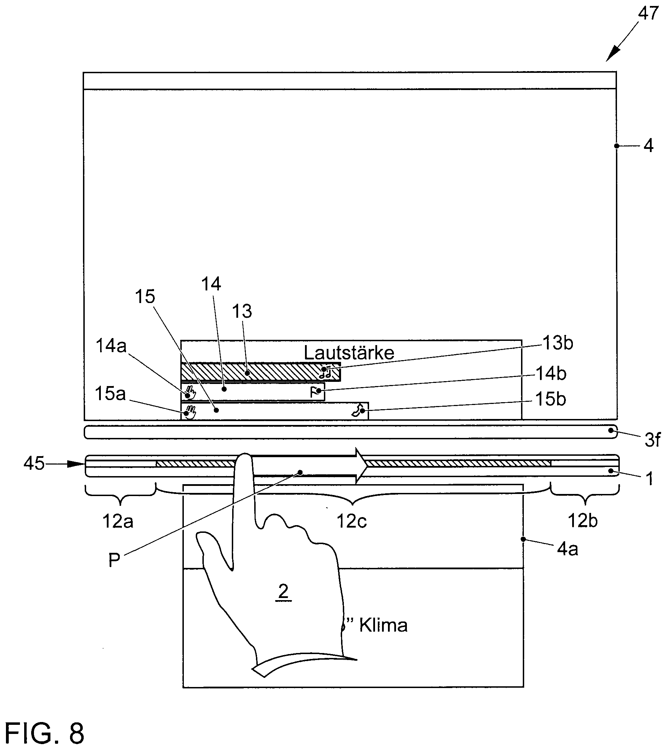

- Figur 8: einer Darstellung einer Wischgeste mit der Hand eines Anwenders auf einer Fingerleiste eines Ausführungsbeispiels einer erfindungsgemäßen Anwenderschnittstelle;

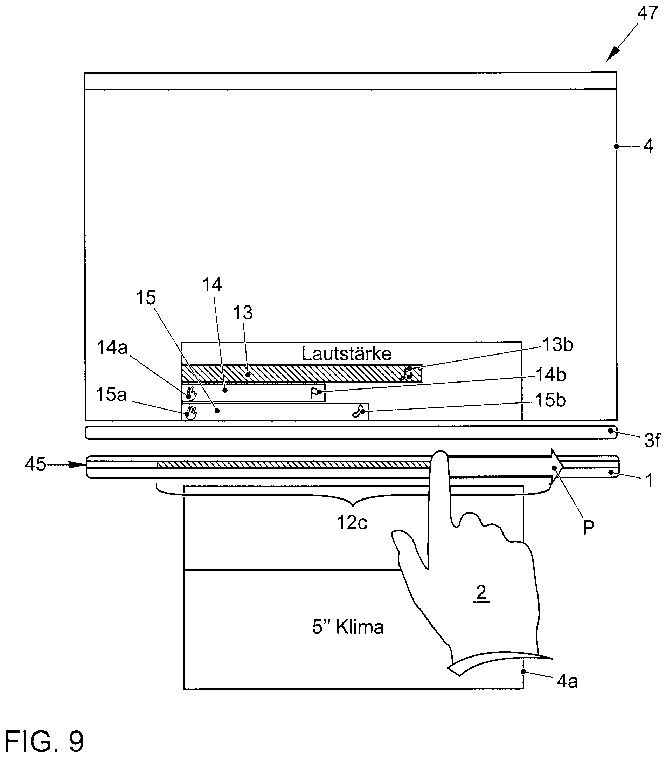

- Figur 9: einer Darstellung des Ergebnisses einer Ein-Finger-Wischgeste auf der Fingerleiste eines Ausführungsbeispiels einer erfindungsgemäßen Anwenderschnittstelle;

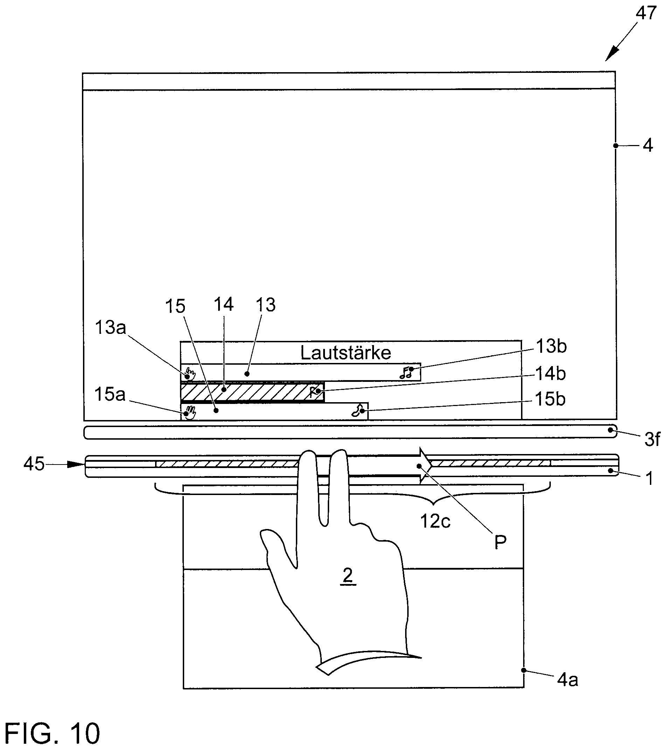

- Figur 10: einer Darstellung einer Ausführung einer Zwei-Finger-Wischgeste mit der Hand eines Anwenders auf einer Fingerleiste eines Ausführungsbeispiels einer erfindungsgemäßen Anwenderschnittstelle;

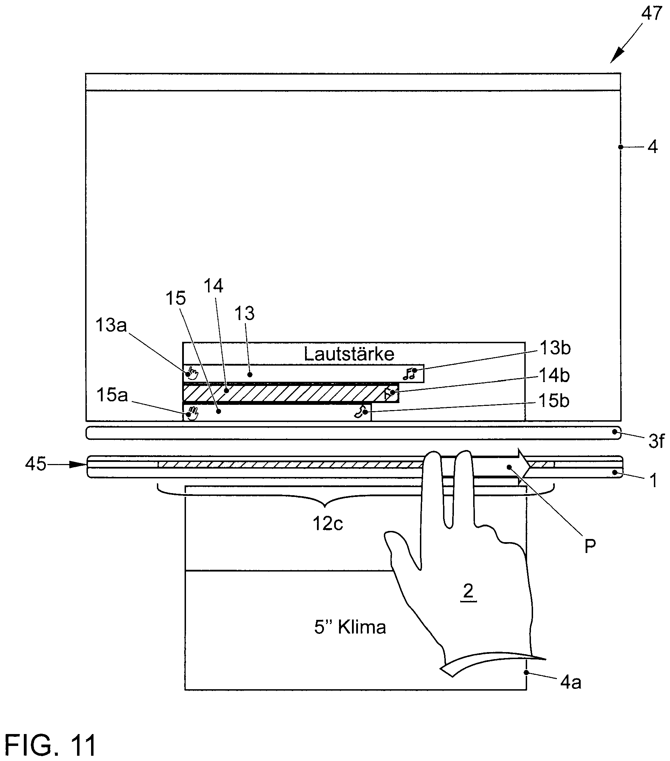

- Figur 11: einer Darstellung des Ergebnisses einer Zwei-Finger-Wischgeste auf der Fingerleiste eines Ausführungsbeispiels einer erfindungsgemäßen Anwenderschnittstelle;

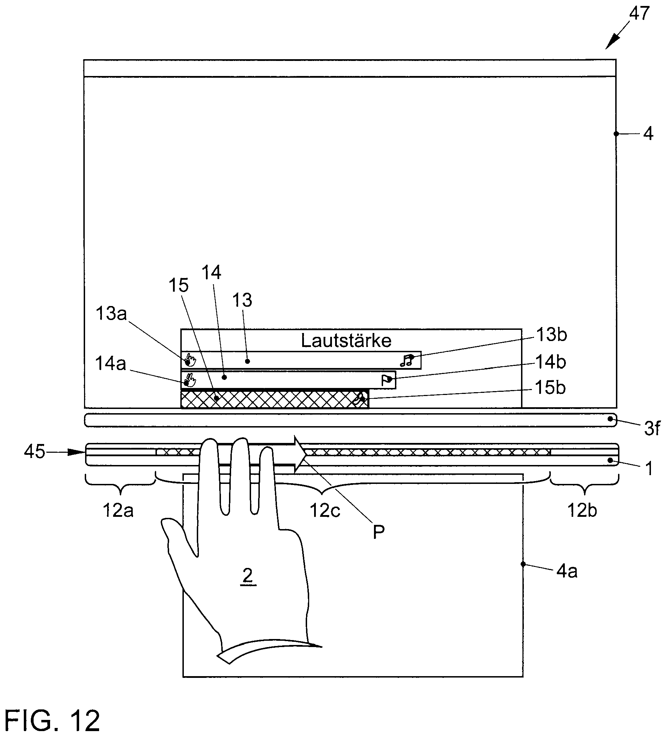

- Figur 12: einer Darstellung einer Ausführung einer Drei-Finger-Wischgeste auf der Fingerleiste eines Ausführungsbeispiels einer erfindungsgemäßen Anwenderschnittstelle;

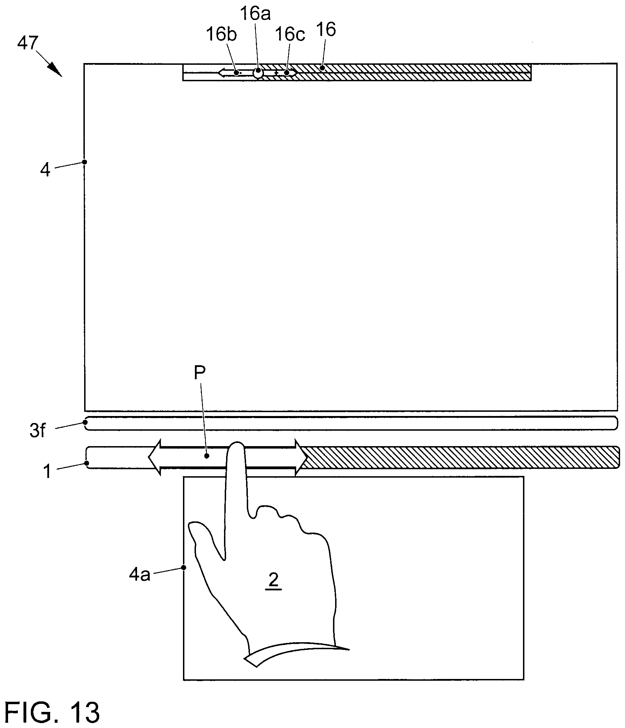

- Figur 13: einer Darstellung einer Einblendung eines Schiebereglers auf einer Anzeigeeinrichtung eines Ausführungsbeispiels einer erfindungsgemäßen Anwenderschnittstelle im Ansprechen auf die Ausführung einer Wischgeste auf einer Fingerleiste; und

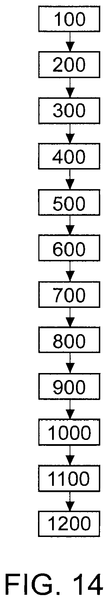

- Figur 14: ein Flussdiagramm veranschaulichend Schritte eines Ausführungsbeispiels eines erfindungsgemäßen Verfahrens zur Ausgabe einer Rückmeldung über eine Eingabe mittels einer Fingerleiste.

### Ausführungsformen der Erfindung

Figur 6 zeigt einen Pkw 10 als Ausführungsbeispiel eines Fortbewegungsmittels mit einer Anwenderschnittstelle 47. Zwei Bildschirme 4, 4a in Form von Touchscreens sind als Anzeigeeinrichtung in das Armaturenbrett des Pkws 10 eingelassen. Zwischen den Bildschirmen 4, 4a ist eine Fingerleiste 1 als Teil einer Erfassungseinheit angeordnet. Ein Datenspeicher 6 ist zur Speicherung von Instruktionen vorgesehen, welche die Anwenderschnittstelle 47 zur Ausführung eines erfindungsgemäßen Verfahrens einrichten. Ein Lautsprecher 48 ist zur Ausgabe von Hinweis- und Signaltönen sowie zur akustischen Untermalung von Anwendereingaben und Reaktionen der Anwenderschnittstelle 47 vorgesehen. Die vorgenannten Komponenten sind ebenso wie zwei Ambientelichtleisten 49a und 49b, welche in das Armaturenbrett bzw. eine Tür des Pkws 10 eingelassen sind, informationstechnisch mit einem elektronischen Steuergerät 5 als Auswerteeinheit verbunden. Ein Fahrersitz 8a und ein Beifahrersitz 8b sind vorgesehen, einen Fahrer bzw. einen Beifahrer als potentielle Anwender der erfindungsgemäßen Anwenderschnittstelle 47 aufzunehmen.

Figur 7 zeigt eine Annäherung einer Hand eines Anwenders 2 an eine erfindungsgemäße Anwenderschnittstelle 47. Zwischen dem Bildschirm 4 und dem Bildschirm 4a sind eine Fingerleiste 1 und eine Infrarot-LED-Leiste 3f als Bestandteil einer Eingabeeinrichtung zur Erkennung einer Annäherung der Hand vorgesehen. Die Fingerleiste 1 weist distale Schaltflächen 12a, 12b auf, zwischen welchen ein Wischgestenbereich 12c angeordnet ist. Die gesamte Fingerleiste 1 ist durch einen linienförmigen Lichtauslass 45 durchsetzt, welcher in Ansprechen auf die erkannte Annäherung im Wischgestenbereich 12c einen Helligkeitsverlauf ausgibt. Durch den Helligkeitsverlauf wird dem Anwender angezeigt, in welche Richtung eine Wischgeste auszuführen ist, um die der Fingerleiste 1 aktuell zugeordnete Audiolautstärke zu erhöhen bzw. zu verringern.

Figur 8 zeigt die Ausführung einer Ein-Finger-Wischgeste auf der Fingerleiste 1 entlang eines Pfeils P, welche zur Anpassung einer Audiolautstärke einer aktuellen Audiolautstärke (vorliegend "Medienwiedergabe") vordefiniert ist. Auf dem Bildschirm 4 werden drei Schieberegler 13, 14, 15 angezeigt, wobei der Schieberegler 13 ein Piktogramm 13b ("Notensymbol") und eine Balkenfarbe aufweist, welche mit der vom Lichtauslass 45 im Wischgestenbereich 12c ausgeschütteten Lichtfarbe übereinstimmt. Unterhalb des Schiebereglers 13 ist ein Schieberegler 14 dargestellt, welcher ein Piktogramm 14a ("Hand mit zwei ausgestreckten Fingern") und ein Piktogramm 14b ("Zielflagge") zeigt. Die Farbe des Schiebereglers 14 ist aktuell schwarz. Unterhalb des Schiebereglers 14 wird ein Schieberegler 15 zur Anpassung einer Telefonielautstärke angezeigt, der ein Piktogramm 15a ("Hand mit drei ausgestreckten Fingern") und ein Piktogramm 15b ("Telefonhörer") aufweist. Die Balkenfarbe des Schiebereglers 15 ist aktuell schwarz.

Figur 9 zeigt das Ergebnis einer fortgeführten Wischgeste der Hand des Anwenders 2 in Richtung des Pfeils P, im Ansprechen worauf der Balken des Schiebereglers 13 in Richtung des Pfeils P verlängert und das Piktogramm 13b entsprechend nach rechts verschoben worden ist. In korrespondierendem Maße wird die Audiolautstärke der Medienwiedergabe erhöht.

Figur 10 zeigt eine Ausführung einer Zwei-Finger-Wischgeste einer Hand eines Anwenders 2 auf der Fingerleiste 1 in Richtung eines Pfeils P, im Ansprechen worauf der Schieberegler 14 eine blaue Balkenfarbe entsprechend dem vom Lichtauslass 45 im Wischgestenbereich 12c ausgeschütteten Licht erhält. Um dem Anwender anzuzeigen, auf welche Weise er zur Anpassung der Lautstärke der Medienwiedergabe wechseln kann, weist nun der obere Schieberegler 13 ein Piktogramm 13a ("Hand mit einem ausgestreckten Finger") auf. Der Schieberegler 13 ist nun schwarz ("inaktiv") dargestellt.

Figur 11 zeigt das Ergebnis einer fortgeführten Zwei-Finger-Geste auf der Fingerleiste 1 des Anwenders, im Ansprechen worauf der Balken des Schiebereglers 14 entsprechend in Richtung des Pfeils P verlängert und das Piktogramm 14b entsprechend nach rechts verschoben worden ist.

Figur 12 zeigt die Ausführung einer Drei-Finger-Wischgeste mit der Hand eines Anwenders 2 auf der Fingerleiste 1, im Ansprechen worauf der Lichtauslass 45 im Wischgestenbereich 12c entsprechend der Balkenfarbe des Schiebereglers 15 grünes Licht ausschüttet. Der Schieberegler 14 auf dem Bildschirm 4 wird nun schwarz dargestellt und trägt ein Piktogramm 14a, um dem Anwender zu veranschaulichen, dass zur Anpassung der Navigationsausgabelautstärke eine Zwei-Finger-Wischgeste auf der Fingerleiste 1 auszuführen ist. Die Fortführung der dargestellten Drei-Finger-Wischgeste auf der Fingerleiste 1 in Richtung des Pfeils P erhöht die Lautstärke der Telefonieausgabe, verlängert den Balken des Schiebereglers 15 in Richtung des Pfeils P und verschiebt das Piktogramm 15b entsprechend nach rechts.

Figur 13 zeigt die Ausführung einer Ein-Finger-Wischgeste auf einem alternativen Ausführungsbeispiel einer erfindungsgemäßen Anwenderschnittstelle 47. Ein Doppelpfeil P veranschaulicht eine in horizontaler Richtung ausführbare Wischgeste auf der Fingerleiste 1, im Ansprechen worauf eine Statusleiste (nicht dargestellt) am oberen Rand des Bildschirms 4 von einem Schieberegler 16 überlagert wird, welcher einen mit dem vom Lichtauslass ausgeschütteten Licht korrespondierenden Farbverlauf zeigt. Eine aktuelle Position 16a des Schiebereglers 16 repräsentiert die aktuell mittels der Hand des Anwenders 2 eingestellte Audiolautstärke. Ein mit einem Minussymbol versehener, nach links gerichteter Pfeil 16b veranschaulicht die Verringerung der aktuellen Audiolautstärke als Auswirkung einer nach links gerichteten Wischgeste und animiert den Anwender zur Anpassung der Audiolautstärke mittels des Schiebereglers 16. Ein mit einem Plussymbol versehener, nach rechts gerichteter Pfeil 16c veranschaulicht die Wischgeste in Richtung zur Erhöhung der Lautstärke einer aktuell ausgegebenen Audioquelle.

Figur 14 veranschaulicht Schritte eines Verfahrens zur Ausgabe einer Rückmeldung über eine Eingabe mittels einer Fingerleiste. In Schritt 100 wird eine Annäherung eines Anwenders an eine Erfassungseinheit erkannt und im Ansprechen darauf in Schritt 200 eine Helligkeit einer ausgeschütteten Lichtfarbe in Abhängigkeit einer aktuell eingestellten Lautstärke angepasst. In Schritt 300 wird eine Berührung der Fingerleiste durch eine Hand eines Anwenders erkannt und im Ansprechen darauf in Schritt 400 ein Helligkeitsverlauf angezeigt, wobei Bereiche geringer Helligkeit für geringere Lautstärken und Bereiche hoher Helligkeit für höhere Lautstärken stehen.

In Schritt 500 wird eine vordefinierte Anzahl auf die Fingerleiste aufgelegter Finger erfasst und im Ansprechen darauf in Schritt 600 eine der Anzahl aufgelegter Finger zugeordnete Lichtfarbe ausgeschüttet. Die Lichtfarbe repräsentiert auch eine der Fingerleiste zugeordnete Audiosignalquelle bzw. die Auswirkung einer Wischgeste auf der Fingerleiste auf die Audiosignalquelle. In Schritt 700 wird das Auflegen eines weiteren Fingers auf die Fingerleiste erkannt und im Ansprechen darauf in Schritt 800 die ausgeschüttete Lichtfarbe ebenso wie die der Wischgeste zugeordnete Funktion verändert. In Schritt 900 wird nun eine verringerte Anzahl auf der Fingerleiste aufgelegter Finger während einer Wischgeste erkannt und im Ansprechen darauf in Schritt 1000 keine Änderung der ausgeschütteten Lichtfarbe vorgenommen. Entsprechend bleibt auch eine Audiosignalquelle der Wischgeste auf der Fingerleiste zugeordnet, welche vor dem Abheben des Fingers bzw. der Finger der Fingerleiste zugeordnet war. In Schritt 1100 wird eine Anwendereingabe mit einer vordefinierten Mindestdauer ("Longpress") erfasst, welche zwei Sekunden andauert. Im Ansprechen darauf wird in Schritt 1200 die Anwenderschnittstelle ausgeschaltet. Zumindest wird hierbei das Backlight einer Anzeigeeinrichtung der Anwenderschnittstelle ausgeschaltet.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Fingerleiste
- 2: Anwender
- 3: Erfassungseinheit
- 3a: kapazitive Antennen
- 3b: elektronische Bauteile
- 3c: kapazitive Antennen (Tastbereich)
- 3d: Träger
- 3e: Platine der Erfassungseinheit
- 3f: Infrarot-LED-Leiste
- 4, 4a: Bildschirm
- 5: elektronisches Steuergerät
- 6: Datenspeicher
- 7: Annäherungssensorik
- 8a: Fahrersitz
- 8b: Beifahrersitz
- 9: LED
- 10: PKW
- 11: Steg/Rahmenteil
- 12: Sims
- 12a, 12b: Schaltflächen auf der Fingerleiste
- 12c: Wischgestenbereich auf der Fingerleiste
- 13, 14, 15: Schieberegler
- 13a, 14a, 15a: Piktogramm
- 13b, 14b, 15b: Piktogramm
- 16: Schieberegler
- 16a: Aktuelle Position des Schiebereglers
- 16b, 16c: Horizontale Pfeile in Richtung geringerer bzw. höherer Lautstärken
- 40, 4a: Anzeigefläche
- 41, 42: haptische Grenzen
- 43, 44: Endbereiche
- 45: Lichtauslass
- 46: Lichtleiter
- 47: Anwenderschnittstelle
- 48: Lautsprecher
- 49a, 49b: Ambientelichtleisten
- 100 bis 1200: Verfahrensschritte
- P: Pfeil

## Patentansprüche

1. Verfahren zur Ausgabe einer Rückmeldung über eine Eingabe mittels einer Eingabeeinrichtung (1) zur Entgegennahme zweidimensional geführter eindimensionaler Wischgesten, nachfolgend "Fingerleiste (1)" genannt, umfassend die Schritte
- Erfassen (500) einer vordefinierten Anzahl auf die Fingerleiste (1) aufgelegter Finger durch die Fingerleiste (1) und im Ansprechen darauf
- Ausschütten (600) einer der Anzahl aufgelegter Finger zugeordneten Lichtfarbe und
- Anpassen einer durch die Anzahl auf die Fingerleiste aufgelegter Finger vordefinierten Funktion aufgrund einer auf der Fingerleiste ausgeführten Wischgeste.

2. Verfahren nach Anspruch 1, weiter umfassend
- Erkennen (100) einer Annäherung eines Anwenders und im Ansprechen darauf
- Anpassen (200) einer Helligkeit der ausgeschütteten Lichtfarbe in Abhängigkeit einer aktuell eingestellten Audio-Lautstärke.

3. Verfahren nach Anspruch 1 oder 2, weiter umfassend
- Erkennen (300) einer Berührung der Fingerleiste (1) durch ein Eingabemittel (2) und im Ansprechen darauf
- Anzeigen (400) eines Helligkeitsverlaufes, wobei Bereiche geringer Helligkeit für Bereiche zur Definition geringerer Lautstärken und Bereiche mit höherer Helligkeit für Bereiche zur Definition höherer Lautstärken stehen.

4. Verfahren nach einem der vorstehenden Ansprüche weiter umfassend die Schritte
- Erkennen (700) eines weiteren auf die Fingerleiste (1) aufgelegten Fingers, und im Ansprechen darauf
- Verändern (800) der ausgeschütteten Lichtfarbe.

5. Verfahren nach einem der vorstehenden Ansprüche weiter umfassend die Schritte
- Erkennen (900) einer verringerten Anzahl auf der Fingerleiste (1) aufgelegter Finger während einer Wischgeste, und im Ansprechen darauf
- Beibehalten (1000) einer zuvor ausgeschütteten Lichtfarbe.

6. Verfahren nach einem der vorstehenden Ansprüche weiter umfassend die Schritte
- Erfassen (1100) einer Anwendereingabe mit einer vordefinierten Mindestdauer, wobei die Mindestdauer insbesondere mindestens zwei Sekunden, bevorzugt mindestens drei Sekunden beträgt, und im Ansprechen darauf
- Ausschalten (1200) der Anwenderschnittstelle (47).

7. Anwenderschnittstelle für ein Fortbewegungsmittel (10) umfassend
- eine Eingabeeinrichtung (1) zur Entgegennahme zweidimensional geführter eindimensionaler Wischgesten, nachfolgend "Fingerleiste (1)" genannt,
- einen Lichtauslass (45), und
- eine Auswerteeinheit (5), wobei
- die Fingerleiste (1) eingerichtet ist, eine Anzahl aufgelegter Finger aufzulösen, und
- die Auswerteeinheit (5) eingerichtet ist,
- eine für die Anzahl aufgelegter Finger vordefinierte Lichtfarbe auszuwählen und
- eine durch die Anzahl auf die Fingerleiste aufgelegter Finger vordefinierte Funktion aufgrund einer auf der Fingerleiste ausgeführten Wischgeste anzupassen, wobei
- der Lichtauslass (45) eingerichtet ist, die ausgewählte Lichtfarbe auszuschütten.

8. Anwenderschnittstelle nach Anspruch 7, wobei der Lichtauslass (45)
- linienförmig ausgestaltet und parallel zu einer Längserstreckung der Fingerleiste (1) angeordnet ist.

9. Anwenderschnittstelle nach Anspruch 7 oder 8, wobei der Lichtauslass (45) in die Fingerleiste (1) integriert ist.

10. Anwenderschnittstelle nach einem der Ansprüche 7 bis 9, wobei die Auswerteeinheit (5) eingerichtet ist,
- einen weiteren auf der Fingerleiste (1) aufgelegten Finger zu erkennen, und im Ansprechen darauf
- die ausgeschüttete Lichtfarbe zu verändern, oder
- eine verringerte Anzahl auf der Fingerleiste (1) aufgelegter Finger zu erkennen, und im Ansprechen darauf
- eine zuvor ausgeschüttete Lichtfarbe beizubehalten.

11. Anwenderschnittstelle nach einem der Ansprüche 7 bis 10, wobei die Anwenderschnittstelle (47) weiter eingerichtet ist,
- in Reaktion auf eine mit einer ersten Anzahl auf die Fingerleiste (1) aufgelegter Finger gestarteten Wischgeste eine Audio-Lautstärke für eine Medienwiedergabe anzupassen und/oder
- in Reaktion auf eine mit einer zweiten Anzahl auf die Fingerleiste (1) aufgelegter Finger gestarteten Wischgeste eine Audio-Lautstärke für eine Navigationsansage anzupassen und/oder
- in Reaktion auf eine mit einer dritten Anzahl auf die Fingerleiste (1) aufgelegter Finger gestarteten Wischgeste eine Audio-Lautstärke für eine Telefonielautstärke anzupassen,
insbesondere sofern die Anzahl aufgelegter Finger während der Wischgeste nicht erhöht wird.

12. Anwenderschnittstelle nach einem der Ansprüche 7 bis 11, wobei
- die erste Anzahl ein einziger Finger und/oder
- die zweite Anzahl genau zwei Finger und/oder
- die dritte Anzahl genau drei Finger
beschreibt.

13. Anwenderschnittstelle nach einem der vorstehenden Ansprüche 7 bis 12, welche weiter eingerichtet ist,
- im Ansprechen auf eine während einer Ausgabe einer Navigationsausgabe mit nur einem Finger ausgeführten Wischgeste eine Lautstärke der Navigationsausgabe anzupassen, und/oder
- im Ansprechen auf eine während eines Telefonates mit nur einem Finger ausgeführten Wischgeste eine Lautstärke des Telefonates anzupassen.

14. Anwenderschnittstelle nach einem der vorstehenden Ansprüche 7 bis 13 weiter umfassend
- eine Anzeigeeinrichtung (4), welche eingerichtet ist, eine auf der Anzeigeeinrichtung (4) angezeigte Statusleiste im Ansprechen auf eine Wischgeste auf der Fingerleiste (1) mit einem Schieberegler (16) zu überlagern, welcher insbesondere eingerichtet ist, stets auf eine aktuell eingestellte Lautstärke eingestellt zu sein, und bevorzugt eingerichtet ist, berührende Anwendereingaben zur Anpassung einer Lautstärke entgegenzunehmen.

15. Computerprogrammprodukt umfassend Instruktionen oder Signalfolge repräsentierend Instruktionen, welche, wenn Sie auf einer Auswerteeinheit (5) einer Anwenderschnittstelle (47) nach einem der Ansprüche 7 bis 14 ausgeführt werden, die Auswerteeinheit (5) veranlassen, die Schritte eines Verfahrens nach einem der Ansprüche 1 bis 6 durchzuführen.

16. Fortbewegungsmittel umfassend eine Anwenderschnittstelle (47) nach einem der Ansprüche 7 bis 14.

## Claims

1. A method for outputting feedback about an input by means of an input device (1) for receiving two-dimensionally guided one-dimensional swipe gestures, hereafter referred to as a "finger-operated control bar (1)", comprising the following steps:
- detecting (500), by the finger-operated control bar (1), a predefined number of fingers placed on the finger-operated control bar (1), and, in response thereto,
- emitting (600) a light color assigned to the number of applied fingers; and
- adapting a function predefined by the number of fingers placed on the finger-operated control bar on the basis of a swipe gesture carried out on the finger-operated control bar.

2. The method according to claim 1, further comprising:
- identifying (100) an approach of a user and, in response thereto,
- adjusting (200) a brightness of the emitted light color as a function of a currently set audio volume.

3. The method according to claim 1 or 2, further comprising:
- identifying (300) a contact of the finger-operated control bar (1) by an input means (2) and, in response thereto,
- displaying (400) a brightness progression, wherein areas of low brightness represent areas for defining lower volumes and areas of greater brightness represent areas for defining higher volumes.

4. The method according to any one of the preceding claims, further comprising the following steps:
- identifying (700) another finger placed on the finger-operated control bar (1), and, in response thereto,
- varying (800) the emitted light color.

5. The method according to any one of the preceding claims, further comprising the following steps:
- identifying (900) a reduced number of fingers placed on the finger-operated control bar (1) during a swipe gesture, and, in response thereto,
- maintaining (1000) a previously emitted light color.

6. The method according to any one of the preceding claims, further comprising the following steps:
- detecting (1100) a user input having a predefined minimum duration, the minimum duration being in particular at least two seconds, preferably at least three seconds, and, in response thereto,
- switching off (1200) the user interface (47).

7. A user interface for a means of transportation (10), comprising
- an input device (1) for receiving two-dimensionally guided one-dimensional swipe gestures, hereafter referred to as a "finger-operated control bar (1)";
- a light outlet (45); and
- an evaluation unit (5), wherein
- the finger-operated control bar (1) is designed to resolve a number of applied fingers, and
- the evaluation unit (5) is designed to
- select a light color predefined for the number of applied fingers, and
- adapt a function predefined by the number of fingers placed on the finger-operated control bar on the basis of a swipe gesture carried out on the finger-operated control bar, wherein
- the light outlet (45) is designed to emit the selected light color.

8. The user interface according to claim 7, wherein the light outlet (45)
- has a linear configuration and is arranged parallel to a longitudinal extension of the finger-operated control bar (1).

9. The user interface according to claim 7 or 8, wherein the light outlet (45) is integrated into the finger-operated control bar (1).

10. The user interface according to any one of claims 7 to 9, wherein the evaluation unit (5) is designed to
- identify a further finger placed on the finger-operated control bar (1), and, in response thereto,
- change the emitted light color, or
- identify a reduced number of fingers placed on the finger-operated control bar (1), and, in response thereto,
- maintain a previously emitted light color.

11. The user interface according to any one of claims 7 to 10, wherein the user interface (47) is further designed to
- adjust an audio volume for media playback in response to a swipe gesture started with a first number of fingers placed on the finger-operated control bar (1), and/or
- adjust an audio volume for a navigation announcement in response to a swipe gesture started with a second number of fingers placed on the finger-operated control bar (1), and/or
- adjust an audio volume for a telephony volume in response to a swipe gesture started with a third number of fingers placed on the finger-operated control bar (1),
in particular, provided the number of applied fingers is not increased during the swipe gesture.

12. The user interface according to any one of claims 7 to 11, wherein
- the first number describes a single finger and/or
- the second number describes exactly two fingers and/or
- the third number describes exactly three fingers

13. The user interface according to any one of the preceding claims 7 to 12, which is further designed to
- adjust a volume of the navigation output in response to a swipe gesture carried out with only one finger during an output of a navigation output, and/or
- adjust a volume of the telephone call in response to a swipe gesture carried out with only one finger during a telephone call.

14. The user interface according to any one of the preceding claims 7 to 13, further comprising
- a display device (4), which is designed to superimpose a status bar displayed on the display device (4) in response to a swipe gesture on the finger-operated control bar (1) with a slide controller (16), which is in particular designed to always be set to a currently set volume and which is preferably designed to receive user touch inputs for adjusting a volume.

15. A computer program product, comprising instructions or a signal sequence representing instructions which, when executed in an evaluation unit (5) of a user interface (47) in accordance with any one of claims 7 to 14, prompt the evaluation unit (5) to carry out the steps of a method according to any one of claims 1 to 6.

16. A means of transportation, comprising a user interface (47) according to any one of claims 7 to 14.

## Revendications

1. Procédé pour l'émission d'un retour d'informations via une entrée au moyen d'un dispositif d'entrée (1) pour la réception de mouvements de glissement unidimensionnels guidés en deux dimensions, désigné ci-après par « barre tactile (1) », comprenant les étapes de
- détection (500) d'un nombre prédéfini de doigts posés sur la barre tactile (1) par la barre tactile (1) et en réponse à cela
- distribution (600) d'une couleur de lumière associée au nombre de doigts posés et
- adaptation d'une fonction prédéfinie par le nombre de doigts posés sur la barre tactile sur la base d'un mouvement de glissement exécuté sur la barre tactile.

2. Procédé selon la revendication 1, comprenant en outre
- la reconnaissance (100) d'une approche d'un utilisateur et en réponse à cela
- l'adaptation (200) d'une luminosité de la couleur de lumière distribuée en fonction d'un volume audio réglé actuellement.

3. Procédé selon la revendication 1 ou 2, comprenant en outre
- la reconnaissance (300) d'un effleurement de la barre tactile (1) par un moyen d'entrée (2) et en réponse à cela
- l'affichage (400) d'une courbe de luminosité, des zones de luminosité plus faible représentant des zones pour la définition de volumes sonores plus faibles et des zones de luminosité plus élevée représentant des zones pour la définition de volumes sonores plus élevés.

4. Procédé selon l'une quelconque des revendications précédentes comprenant en outre les étapes de
- reconnaissance (700) d'un autre doigt posé sur la barre tactile (1) et en réponse à cela
- modification (800) de la couleur de lumière distribuée.

5. Procédé selon l'une quelconque des revendications précédentes comprenant en outre les étapes de
- reconnaissance (900) d'un nombre réduit de doigts posés sur la barre tactile (1) durant un mouvement de glissement et en réponse à cela
- conservation (1000) d'une couleur de lumière distribuée auparavant.

6. Procédé selon l'une quelconque des revendications précédentes comprenant en outre les étapes de
- détection (1100) d'une entrée d'utilisateur présentant une durée minimale prédéfinie, la durée minimale étant en particulier d'au moins deux secondes, de préférence d'au moins trois secondes et en réponse à cela
- arrêt (1200) de l'interface utilisateur (47).

7. Interface utilisateur pour un moyen de locomotion (10) comprenant
- un dispositif d'entrée (1) pour la réception de mouvements de glissement unidimensionnels guidés en deux dimensions, désigné ci-après par « barre tactile (1) »,
- une sortie de lumière (45) et
- une unité de traitement (5),
- la barre tactile (1) étant conçue pour distinguer le nombre de doigts posés et
- l'unité de traitement (5) étant conçue
- pour choisir une couleur de lumière prédéfinie pour le nombre de doigts posés et
- pour adapter une fonction prédéfinie par le nombre de doigts posés sur la barre tactile sur la base d'un mouvement de glissement exécuté sur la barre tactile,
- la sortie de lumière (45) étant conçue pour distribuer la couleur de lumière choisie.

8. Interface utilisateur selon la revendication 7, la sortie de lumière (45)
- étant conçue en forme de ligne et disposée parallèlement à une extension longitudinale de la barre tactile (1).

9. Interface utilisateur selon la revendication 7 ou 8, la sortie de lumière (45) étant intégrée dans la barre tactile (1).

10. Interface utilisateur selon l'une quelconque des revendications 7 à 9, l'unité de traitement (5) étant conçue
- pour reconnaître un autre doigt posé sur la barre tactile (1) et en réponse à cela
- modifier la couleur de lumière distribuée ou
- pour reconnaître un nombre réduit de doigts posés sur la barre tactile (1) et en réponse à cela
- conserver une couleur de lumière distribuée auparavant.

11. Interface utilisateur selon l'une quelconque des revendications 7 à 10, l'interface utilisateur (47) étant en outre conçue pour,
- en réponse à un mouvement de glissement commencé avec un premier nombre de doigts posés sur la barre tactile (1), adapter le volume audio pour une lecture de médias et/ou
- en réponse à un mouvement de glissement commencé avec un deuxième nombre de doigts posés sur la barre tactile (1), adapter un volume audio pour des instructions de navigation et/ou
- en réponse à un mouvement de glissement commencé avec un troisième nombre de doigts posés sur la barre tactile (1), adapter un volume audio pour un volume sonore de téléphonie,
en particulier dans la mesure où le nombre de doigts posés n'est pas augmenté durant le mouvement de glissement.

12. Interface utilisateur selon l'une quelconque des revendications 7 à 11,
- le premier nombre caractérisant un seul doigt et/ou
- le deuxième nombre caractérisant exactement deux doigts et/ou
- le troisième nombre caractérisant exactement trois doigts.

13. Interface utilisateur selon l'une quelconque des revendications 7 à 12, laquelle est en outre conçue pour,
- en réponse à un mouvement de glissement exécuté avec un seul doigt durant une sortie d'une instruction de navigation, adapter un volume sonore des instructions de navigation et/ou
- en réponse à un mouvement de glissement exécuté avec un seul doigt durant un appel téléphonique, adapter un volume sonore de l'appel téléphonique.

14. Interface utilisateur selon l'une quelconque des revendications 7 à 13, comprenant en outre
- un dispositif d'affichage (4), lequel est conçu pour, en réponse à un mouvement de glissement sur la barre tactile (1), superposer un curseur (16) sur une barre de statut affichée sur le dispositif d'affichage (4), lequel est conçu en particulier pour être toujours réglé sur un volume sonore réglé actuellement et conçu de préférence pour recevoir des entrées d'utilisateur tactiles liées à l'adaptation d'un volume sonore.

15. Produit de programme informatique comprenant des instructions ou une séquence de signaux représentant des instructions, lesquelles, lorsqu'elles sont exécutées sur une unité de traitement (5) d'une interface utilisateur (47) selon l'une quelconque des revendications 7 à 14, amènent l'unité de traitement (5) à exécuter les étapes d'un procédé selon l'une quelconque des revendications 1 à 6.

16. Moyen de locomotion comprenant une interface utilisateur (47) selon l'une quelconque des revendications 7 à 14.
